# NEUE EUROPÄISCHE PATENTSCHRIFT

(11) **EP 3 643 173 B2**
(45) Veröffentlichungstag und Bekanntmachung des Hinweises auf die Entscheidung über den Einspruch: **21.01.2026**
(45) Hinweis auf die Patenterteilung: 26.04.2023
(21) Anmeldenummer: 19401042.7
(22) Anmeldetag: 18.10.2019
(51) Int. Cl.: A01M 21/04

(54) **VERFAHREN ZUM AUSBRINGEN VON FLÜSSIGKEIT**
METHOD FOR THE APPLICATION OF LIQUID
PROCÉDÉ DE DISTRIBUTION DU LIQUIDE

(30) Priorität: 25.10.2018 DE 102018126588
(43) Veröffentlichungstag der Anmeldung: 29.04.2020
(60) Teilanmeldung: 23158658.7
(73) Patentinhaber: Amazonen-Werke H. Dreyer SE & Co. KG, 49205 Hasbergen (DE)
(72) Erfinder: Austermann, Stefan, 48291 Telgte (DE); Dreyer, Justus, 49078 Osnabrück (DE); Ehlen, Volker, 49205 Hasbergen (DE); Johannaber, Stefan Jan, 49536 Lienen (DE); Kiefer, Stefan, 49074 Osnabrück (DE); Holtkötter, Christian, 33775 Versmold (DE); Klemann, Timo, 49191 Belm (DE); Hilbert, Florenz, 48282 Emsdetten (DE)
(74) Vertreter: Grünecker Patent- und Rechtsanwälte PartG mbB

(56) Entgegenhaltungen:
- EP-A1- 2 995 382
- WO-A1-2015/154027
- WO-A1-96/02817
- DE-A1- 4 413 739
- GB-A- 2 433 407
- US-A- 4 015 366
- US-A1- 2015 245 565
- US-A1- 2018 243 771

## Beschreibung

Die Erfindung betrifft ein Verfahren zum Ausbringen von Flüssigkeit nach dem Oberbegriff des Patentanspruchs 1 und eine landwirtschaftliche Spritzeinrichtung nach dem Oberbegriff des Patentanspruchs 7.

Unterschiedliche landwirtschaftliche Nutzpflanze werden entlang von parallel zueinander verlaufenden Saatreihen ausgesät. Somit kommt es während der Auswuchsphase der landwirtschaftlichen Nutzpflanzen zu entsprechenden Pflanzenreihen auf der landwirtschaftlichen Nutzfläche.

Zur Bekämpfung von Schadbewuchs, welcher sich zwischen den landwirtschaftlichen Nutzpflanzen während der Aufwuchsphase ausbildet, sind bereits Erfassungssysteme bekannt, welche einzelne Wildpflanzen auf einer landwirtschaftlichen Nutzfläche erfassen können. Dies erlaubt das lokale Ausbringen entsprechender Pflanzenschutzmittel auf die erfassten Wildpflanzen. Die Erfassung einzelner Wildpflanzen auf einer landwirtschaftlichen Nutzfläche ist jedoch vergleichsweise aufwendig, sodass landwirtschaftliche Spritzeinrichtungen mit kostenintensiven Sensor- oder Kamerasystemen auszustatten sind. In einer Vielzahl von Anwendungsbereichen scheidet die Verwendung entsprechender Erfassungssysteme zur gezielten lokalen Ausbringung von Pflanzenschutzmitteln also aus.

Ferner sind im Stand der Technik Systeme bekannt, welche die Erfassung von Pflanzenreihen mit einem vergleichsweise geringen Aufwand ermöglichen (EP 2 995 382, US 4 015 366, US 2018/243771, WO96/02817).

Entsprechende Systeme werden zur reihenbezogenen Ausbringung von Spritzflüssigkeit eingesetzt, erlauben jedoch bisher nicht die Bekämpfung von Schadbewuchs bzw. Wildpflanzen.

Die der Erfindung zugrundeliegende Aufgabe besteht somit darin, die Schadbewuchsbekämpfung auf Pflanzenreihen aufweisenden landwirtschaftlichen Nutzflächen zu vereinfachen.

Die Aufgabe wird gelöst durch ein Verfahren gemäß Anspruch 1.Im Rahmen des erfindungsgemäßen Verfahrens unterscheidet sich die Ausbringung von Flüssigkeit entlang von Reihenbereichen, welche in Fahrtrichtung verlaufende Pflanzenreihen aufweisen, von der Ausbringung von Flüssigkeit entlang von Zwischenbereichen, welche sich zwischen zwei in Fahrtrichtung verlaufenden Pflanzenreihen befinden.

Die Erfindung macht sich die Erkenntnis zunutze, dass durch unterschiedliche Ausbringungen entlang von Reihenbereichen und entlang von Zwischenbereichen der landwirtschaftlichen Nutzfläche keine aufwendige Einzelerfassung von Wildpflanzen oder Schadbewuchs notwendig ist. Die Reihenerfassung ist wesentlich kostengünstiger und einfacher umsetzbar als die Erfassung einzelner Wildpflanzen oder die Erfassung von lokalem Schadbewuchs. Trotzdem erlaubt das erfindungsgemäße Verfahren ein zielgerichtetes Ausbringen entsprechender Pflanzenschutzmittel zum Bekämpfen von Schadbewuchs, ohne dass die Ausbringung entsprechender Wirkstoffe auf den Nutzpflanzenbestand zu erfolgen hat. Somit werden die Nutzpflanzen auf der landwirtschaftlichen Nutzfläche geschont, wodurch das Wachstumspotential gesteigert wird. Im Vergleich zu einer einheitlichen Ausbringung von Pflanzenschutzmitteln über die gesamte landwirtschaftliche Nutzfläche kommt es außerdem zu einer erheblichen Einsparung von Pflanzenschutzmitteln und außerdem zu einer deutlichen Erhöhung der Wirksamkeit des Ausbringvorgangs.

Die auf die Reihenbereiche und/oder die Zwischenbereiche ausgebrachte Flüssigkeit beinhaltet vorzugsweise einen oder mehrere Wirkstoffe. Zumindest ein Wirkstoff kann ein Pflanzenschutzmittel sein, welches die Nutzpflanzen auf der landwirtschaftlichen Nutzfläche vor Schadorganismen schützt. Beispielsweise ist ein Pflanzenschutzmittel ein Insektizid. Zumindest ein Wirkstoff kann auch ein Wachstumsregulator sein. Alternativ oder zusätzlich kann zumindest ein Wirkstoff auch ein Herbizid sein.

Erfindungsgemäß unterscheidet sich die Ausbringung von Flüssigkeit entlang der Reihenbereiche von der Ausbringung von Flüssigkeit entlang der Zwischenbereiche hinsichtlich der Ausbringmenge an Flüssigkeit. Somit unterscheidet sich auch die ausgebrachte Wirkstoffmenge entlang der Reihenbereiche und entlang der Zwischenbereiche. Erfindungsgemäß ist weder die Ausbringmenge in den Reihenbereichen noch die Ausbringmenge in den Zwischenbereichen gleich Null.

Erfindungsgemäß unterscheidet sich optional zusätzlich die Ausbringung von Flüssigkeit entlang der Reihenbereiche von der Ausbringung von Flüssigkeit entlang der Zwischenbereiche hinsichtlich der Ausbringmethode. In einer Ausbringmethode wird die Flüssigkeit mittels einer Düsenausbringung auf die landwirtschaftliche Nutzfläche ausgebracht. In diesem Fall sind die Ausbringelemente vorzugsweise als Spritzdüsen ausgebildet. Bei dieser Ausbringmethode kommt es zu einer Zerstäubung der Flüssigkeit, wodurch zumindest bereichsweise eine gleichmäßige Flüssigkeitsausbringung umsetzbar ist. In einer alternativen Ausbringmethode wird die Flüssigkeit mittels einer Schlauchausbringung auf die landwirtschaftliche Nutzfläche ausgebracht. Bei einer entsprechenden Schlauchausbringung können Ausbringschläuche über die landwirtschaftliche Nutzfläche gezogen werden, sodass die Ausbringung der Flüssigkeit auf der landwirtschaftlichen Nutzfläche entlang von zueinander beabstandeten und im Wesentlichen parallel zueinander verlaufenden Reihen erfolgt. Die Ausbringmethoden können sich auch hinsichtlich der Beabstandung der Ausbringelemente zur landwirtschaftlichen Nutzfläche voneinander unterscheiden. Beispielsweise erfolgt die Ausbringung von Flüssigkeit entlang der Reihenbereiche mittels Ausbringelementen, welche einen ersten Abstand von der landwirtschaftlichen Nutzfläche aufweisen und die Ausbringung der Flüssigkeit entlang der Zwischenbereiche erfolgt mittels Ausbringelementen, welche einen zweiten Abstand zu der landwirtschaftlichen Nutzfläche aufweisen, wobei sich der erste Abstand von dem zweiten Abstand unterscheidet.

Erfindungsgemäß wird optional zusätzlich die Flüssigkeit entlang der Reihenbereiche mittels eines ersten Typs von Ausbringelementen und die Flüssigkeit entlang der Zwischenbereiche mittels eines zweiten Typs von Ausbringelementen ausgebracht. Die Ausbringelemente des ersten Typs können Düsen, insbesondere Flachstrahldüsen, sein, welche vorzugsweise im Bereich des Spritzgestänges angeordnet sind. Die Ausbringelemente des zweiten Typs können Düsen sein, welche im Nahbereich des Bodens angeordnet und über eine Leitung mit dem Spritzgestänge verbunden sind. Die Leitung kann ein Rohr oder ein Schlauch sein. Die im Nahbereich des Bodens angeordneten Düsen bewegen sich während der Ausbringung der Flüssigkeit auf die landwirtschaftliche Nutzfläche vorzugsweise unterhalb eines Blätterdachs der Nutzpflanzen. Die Ausbringelemente des zweiten Typs können auch Dropleg-Düsen sein. Ferner können die Ausbringelemente des ersten Typs oder des zweiten Typs auch Schleppschläuche sein, wobei die Flüssigkeitsausbringung über Schleppschläuche vorzugsweise eine Ausbringung von Flüssigdünger auf die landwirtschaftliche Nutzfläche betrifft.

In einer Weiterbildung des erfindungsgemäßen Verfahrens wird entlang der Reihenbereiche eine erste Flüssigkeit und entlang der Zwischenbereiche eine zweite Flüssigkeit ausgebracht. Die erste Flüssigkeit unterscheidet sich dabei von der zweiten Flüssigkeit. Insbesondere unterscheiden sich die erste Flüssigkeit und die zweite Flüssigkeit hinsichtlich ihrer Bestandteile und/oder hinsichtlich ihrer Zusammensetzung. Insbesondere weisen die erste Flüssigkeit und die zweite Flüssigkeit unterschiedliche Wirkstoffe und/oder unterschiedliche Mengen an Wirkstoffen auf.

Darüber hinaus ist ein erfindungsgemäßes Verfahren bevorzugt, bei welchem die erste Flüssigkeit Pflanzenschutzmittel und/oder Wachstumsregulatoren umfasst. Alternativ oder zusätzlich umfasst die zweite Flüssigkeit zumindest ein Herbizid. Die erste Flüssigkeit und die zweite Flüssigkeit können sich auch in ihren Anteilen an Pflanzenschutzmitteln, Wachstumsregulatoren und/oder Herbiziden unterscheiden. In den Reihenbereichen und in den Zwischenbereichen können einzelne Wirkstoffe auch vollständig weggelassen werden. Herbizide hemmen das Nutzpflanzenwachstum und sind somit in den Reihenbereichen zu vermeiden oder zumindest geringer zu dosieren. In den Zwischenbereichen herrscht regelmäßig ein höherer Unkrautdruck, sodass hier eine stärkere Bekämpfung des Schadbewuchses und somit eine gesteigerte Herbizid-Anwendung notwendig ist. Durch eine geringe Menge an Herbiziden in den Reihenbereichen werden die Nutzpflanzen geschont, sodass es zu einer Steigerung des Wachstumspotentials kommt.

Es ist darüber hinaus ein erfindungsgemäßes Verfahren vorteilhaft, bei welchem die erste Flüssigkeit mehreren oder sämtlichen Ausbringelementen über einen eigenen Flüssigkeitskreislauf zugeführt wird. Alternativ oder zusätzlich wird die erste Flüssigkeit durch eine Wirkstoff-Direkteinspeisung erzeugt. In einem entsprechenden Flüssigkeitskreislauf kann die erste Flüssigkeit dauerhaft zirkulieren, sodass ein hoher Durchmischungsgrad erreicht wird. Darüber hinaus erlaubt ein entsprechender Flüssigkeitskreislauf ein vergleichsweise schnelles Ansprechverhalten der Ausbringelemente, da die in dem Flüssigkeitskreislauf zirkulierende Flüssigkeit den entsprechenden Ausbringelementen rasch bereitgestellt werden kann. Mittels einer entsprechenden Wirkstoff-Direkteinspeisung kann eine bedarfsgerechte Flüssigkeitserzeugung umgesetzt werden. Dies kann insbesondere beim Einsatz von kostenintensiven Wirkstoffen vorteilhaft sein.

In einer anderen Ausführungsform des erfindungsgemäßen Verfahrens wird die zweite Flüssigkeit mehreren oder sämtlichen Ausbringelementen über einen eigenen Flüssigkeitskreislauf zugeführt. Alternativ oder zusätzlich wird die zweite Flüssigkeit durch eine Wirkstoff-Direkteinspeisung erzeugt. Insbesondere wird die erste Flüssigkeit den Ausbringelementen über einen ersten Flüssigkeitskreislauf bereitgestellt, wobei die zweite Flüssigkeit den Ausbringelementen über einen zweiten Flüssigkeitskreislauf bereitgestellt wird. Dabei können die Ausbringelemente der landwirtschaftlichen Spritzeinrichtung entweder lediglich mit einem der Flüssigkeitskreisläufe oder mit beiden Flüssigkeitskreisläufen verbunden sein. Insbesondere kann den Ausbringelementen auch eine Mischkammer vorgeschaltet sein, sodass eine Vermischung der ersten Flüssigkeit und der zweiten Flüssigkeit innerhalb der Mischkammer erfolgen kann.

In einer besonders bevorzugten Ausführungsform des erfindungsgemäßen Verfahrens wird die Ausbringung von Flüssigkeit entlang der Reihenbereiche während des Ausbringvorgangs verändert. Alternativ oder zusätzlich wird die Ausbringung von Flüssigkeit entlang der Zwischenbereiche während des Ausbringvorgangs verändert. Die Ausbringung von Flüssigkeit entlang der Zwischenbereiche kann beispielsweise erfolgen, wenn lokal stark ausgeprägter Schadbewuchs auf der landwirtschaftlichen Nutzfläche innerhalb eines Zwischenbereichs erfasst wird. In diesem Fall ist eine zusätzliche Erfassungseinrichtung notwendig, welche die Erfassung von Wildpflanzen und/oder Schadbewuchs auf der landwirtschaftlichen Nutzfläche ermöglicht. Die Ausbringung von Flüssigkeit entlang der Reihenbereiche kann beispielsweise verändert werden, wenn ein lokal beeinträchtigter Pflanzenzustand entlang der Reihenbereiche erfasst wird. Dies kann beispielsweise über ein Erfassen der Pflanzenhöhe bzw. Wachstumshöhe der Nutzpflanzen erfolgen. Alternativ oder zusätzlich kann eine Farbauswertung entlang der Reihenbereiche erfolgen, sodass aufgrund des Farbzustands der Nutzpflanzen eine lokale Beeinträchtigung des Pflanzenbestands erfasst werden kann.

Darüber hinaus wird erfindungsgemäß die Position von einzelnen oder sämtlichen Ausbringelementen in Bezug auf das Spritzgestänge während des Ausbringens der Flüssigkeit verändert. Beispielsweise können einzelne oder sämtliche Ausbringelemente der landwirtschaftlichen Spritzeinrichtung aktiv und unabhängig voneinander angesteuert werden. Das Positionieren von Ausbringelementen erfolgt durch eine Bewegung der Ausbringelemente quer zur Fahrtrichtung. Das Bewegen der Ausbringelemente erfolgt vorzugsweise mittels elektrischer, pneumatischer oder hydraulischer Aktoren. Eine oder mehrere Ausbringelemente werden oberhalb von Pflanzenreihen positioniert. Eine oder mehrere Ausbringelemente werden oberhalb von Zwischenbereichen positioniert.

Erfindungsgemäß erfolgt das Erfassen von Pflanzenreihen auf der landwirtschaftlichen Nutzfläche mittels mehrerer Kameras der landwirtschaftlichen Spritzeinrichtung, die an dem Spritzgestänge der landwirtschaftlichen Spritzeinrichtung angeordnet sind. Vorzugsweise sind die mehreren Kameras mit einer Steuerungseinrichtung verbunden, welche die Kamerasignale auswertet. Das Ausbringen der Flüssigkeit erfolgt auf die landwirtschaftliche Nutzfläche mittels der Ausbringelemente in Abhängigkeit der durch die Steuerungseinrichtung ausgewerteten Kamerasignale.

Die der Erfindung zugrundeliegende Aufgabe wird ferner durch eine landwirtschaftliche Spritzeinrichtung nach Anspruch 7 gelöst.

Die Steuerungseinrichtung ist vorzugsweise signalleitend mit der Erfassungseinrichtung verbunden.

In einer Ausführungsform der erfindungsgemäßen landwirtschaftlichen Spritzeinrichtung weist diese Ausbringelemente eines ersten Typs und Ausbringelemente eines zweiten Typs auf, wobei die Ausbringelemente derart angeordnet und/oder ausgerichtet sind, dass Flüssigkeit entlang der Reihenbereiche mittels der Ausbringelemente des ersten Typs und Flüssigkeit entlang der Zwischenbereiche mittels der Ausbringelemente des zweiten Typs ausbringbar ist. Hierdurch kann die Flüssigkeit entlang der Reihenbereiche und entlang der Zwischenbereiche mit unterschiedlichen Ausbringmethoden ausgebracht werden.

Hinsichtlich der Vorteile und Modifikationen einer derartigen landwirtschaftlichen Spritzeinrichtung wird auf die Vorteile und Modifikationen des erfindungsgemäßen Verfahrens verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: einen Abschnitt eines Spritzgestänges einer erfindungsgemäßen landwirtschaftlichen Spritzeinrichtung in einer schematischen Darstellung; und
- Fig. 2: Teile einer erfindungsgemäßen landwirtschaftlichen Spritzeinrichtung in einer schematischen Darstellung.

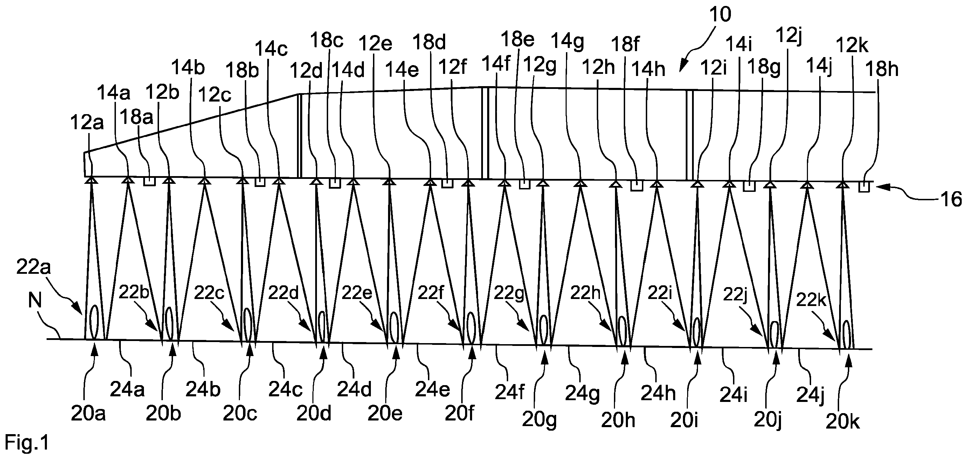

Die Fig. 1 zeigt ein Spritzgestänge 10 einer als Feldspritze ausgebildeten landwirtschaftlichen Spritzeinrichtung. Der dargestellte Abschnitt des Spritzgestänges 10 ist ein seitlicher Ausleger, welche sich quer zur Fahrtrichtung der landwirtschaftlichen Spritzeinrichtung erstreckt. Das Spritzgestänge 10 weist einen weiteren sich in die entgegengesetzte Richtung erstreckenden Ausleger auf.

Das Spritzgestänge 10 umfasst mehrere Gestängesegmente, welche zueinander klappbar ausgebildet sind. An dem Spritzgestänge 10 sind mehrere Kameras 18a-18h einer Erfassungseinrichtung 16 angeordnet. Die Erfassungseinrichtung 16 dient zum Erfassung von Pflanzenreihen 20a-20k auf der landwirtschaftlichen Nutzfläche N. Ferner sind an dem Spritzgestänge 10 mehrere als Spritzdüsen ausgebildete Ausbringelemente 12a-12k, 14a-14j angeordnet, mittels welchen Flüssigkeit auf die landwirtschaftliche Nutzfläche N ausbringbar ist. Mittels der Ausbringelemente 12a-12k ist Flüssigkeit entlang von Reihenbereichen 22a-22k ausbringbar, wobei die Reihenbereiche 22a-22k die in Fahrtrichtung verlaufenden Pflanzenreihen 20a-20k umfassen. Mittels der Ausbringelemente 14a-14j ist Flüssigkeit entlang von Zwischenbereichen 24a-24j ausbringbar, wobei sich die Zwischenbereiche 24a-24j jeweils zwischen zwei in Fahrtrichtung verlaufenden Pflanzenreihen 20a-20k befinden.

Da die Ausbringelemente 12a-12k und die Ausbringelemente 14a-14j sich voneinander unterscheiden, wird die Flüssigkeit in den Reihenbereichen 22a-22k in anderer Weise ausgebracht als in den Zwischenbereichen 24a-24j. Damit dies umgesetzt wird, umfasst die landwirtschaftliche Spritzeinrichtung eine Steuerungseinrichtung, welche die landwirtschaftliche Spritzeinrichtung dazu veranlasst, entlang der Reihenbereiche 22a-22k und entlang der Zwischenbereiche 24a-24j unterschiedliche Ausbringmengen an Flüssigkeit und unterschiedliche Flüssigkeiten auszubringen. Somit wird in den Reihenbereichen 22a-22k eine erste Menge von Flüssigkeit ausgebracht, wobei in den Zwischenbereichen 24a-24j eine zweite Menge von Flüssigkeit ausgebracht wird. Ferner wird in den Reihenbereichen 22a-22k eine erste Flüssigkeit ausgebracht, wobei in den Zwischenbereichen 24a-24j eine zweite Flüssigkeit ausgebracht wird. Die erste Flüssigkeit und die zweite Flüssigkeit unterscheiden sich hinsichtlich ihrer Zusammensetzung und hinsichtlich ihrer Wirkstoffe. Die erste Flüssigkeit, welche entlang der Reihenbereiche 22a-22k ausgebracht wird, umfasst Pflanzenschutzmittel, damit die Nutzpflanzen der Pflanzenreihen 20a-20k vor Schadorganismen geschützt werden. Das Pflanzenschutzmittel kann beispielsweise ein Insektizid sein. Die zweite Flüssigkeit, welche entlang der Zwischenbereiche 24a-24j ausgebracht wird, kann beispielsweise ein Herbizid umfassen, sodass eine effektive Unkrautbekämpfung bzw. Wildpflanzenbekämpfung in den Zwischenbereichen 24a-24j umgesetzt wird.

Da sich die Ausbringung von Flüssigkeit entlang der Reihenbereiche 22a-22k von der Ausbringung von Flüssigkeit entlang der Zwischenbereiche 24a-24j hinsichtlich der Ausbringmenge an Flüssigkeit unterscheidet, kommt es auch zur Ausbringung unterschiedlicher Wirkstoffmengen entlang der Reihenbereiche 22a-22k und entlang der Zwischenbereiche 24a-24j.

Die Ausbringung der ersten Flüssigkeit entlang der Reihenbereiche 22a-22k und die Ausbringung der zweiten Flüssigkeit entlang der Zwischenbereiche 24a-24j kann während des Ausbringvorgangs verändert werden. Beispielsweise kann die Erfassungseinrichtung 16 nicht nur zur Erfassung von Pflanzenreihen 20a-20k, sondern ebenso zur Erfassung von lokalem Schadbewuchs und/oder zur Erfassung von lokalen Wildpflanzen geeignet sein. In diesem Fall kann die Flüssigkeitsausbringung gezielt an den erfassten Schadbewuchs bzw. die erfassten Wildpflanzen angepasst werden. Beispielsweise kann lokal eine erhöhte Menge an Pflanzenschutzmittel oder eine erhöhte Menge an Herbiziden abgegeben werden.

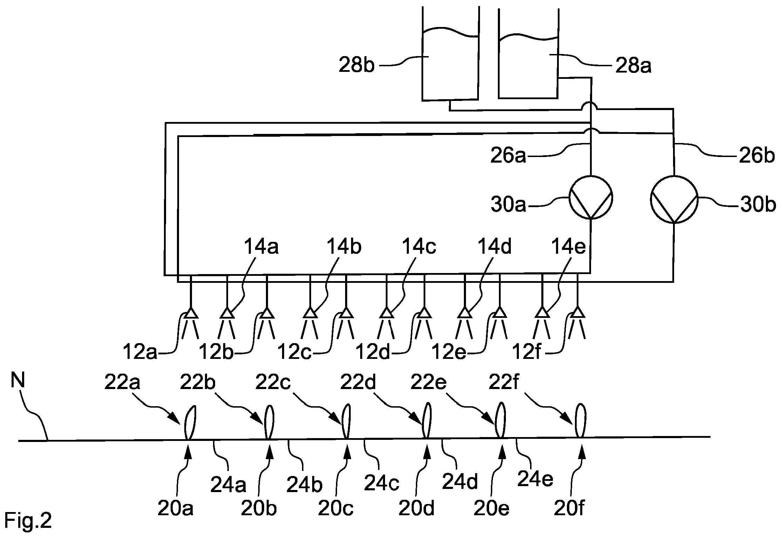

Die Fig. 2 zeigt zwei Flüssigkeitskreisläufe 26a, 26b einer landwirtschaftlichen Spritzeinrichtung. Über den ersten Flüssigkeitskreislauf 26a wird den als Spritzdüsen ausgebildeten Ausbringelementen 12a-12f eine erste Flüssigkeit zur Ausbringung bereitgestellt, welche in dem Vorratsbehälter 28a bevorratet ist. Innerhalb des ersten Flüssigkeitskreislaufs 26a ist eine Pumpe 30a angeordnet, mittels welcher eine Zirkulation der ersten Flüssigkeit innerhalb des ersten Flüssigkeitskreislaufs 26a erzeugt wird. Über den zweiten Flüssigkeitskreislauf 26b wird den als Spritzdüsen ausgebildeten Ausbringelementen 14a-14e eine zweite Flüssigkeit zur Ausbringung bereitgestellt, welche in dem Vorratsbehälter 28b bevorratet ist. Innerhalb des zweiten Flüssigkeitskreislaufs 26b ist eine Pumpe 30b angeordnet, mittels welcher eine Zirkulation der zweiten Flüssigkeit innerhalb des zweiten Flüssigkeitskreislaufs 26b erzeugt wird.

Mittels der Ausbringelemente 12a-12f wird die erste Flüssigkeit entlang von Reihenbereichen 22a-22f ausgebracht, wobei die Reihenbereiche 22a-22f die in Fahrtrichtung verlaufenden Pflanzenreihen 20a-20f umfassen. Über die Ausbringelemente 14a-14e wird die zweite Flüssigkeit entlang von Zwischenbereichen 24a-24e ausgebracht, wobei die Zwischenbereiche 24a-24e jeweils zwischen benachbarten Pflanzenreihen 20a-20f parallel zur Fahrtrichtung verlaufen.

Alternativ zu der Bevorratung der auszubringenden Flüssigkeit in Vorratsbehältern 28a, 28b können die erste Flüssigkeit und/oder die zweite Flüssigkeit auch über eine Wirkstoff-Direkteinspeisung erzeugt werden. Ferner können alternativ zu den dargestellten Flachstrahldüsen auch Dropleg-Düsen eingesetzt werden, deren Düsenöffnung im Nahbereich des Bodens angeordnet ist, sodass die Düsenöffnung sich unterhalb des Blätterdachs der Nutzpflanzen während der Ausbringung der Flüssigkeiten befindet. Ferner können die Ausbringelemente 12a-12f oder die Ausbringelemente 14a-14e auch als Schleppschläuche ausgebildet sein, mittels welchen dann insbesondere Flüssigdünger auf die landwirtschaftliche Nutzfläche N ausgebracht werden kann.

Die Ausbringelemente 12a-12f und/oder die Ausbringelemente 14a-14e sind dabei derart an dem Spritzgestänge 10 der landwirtschaftlichen Spritzeinrichtung befestigt, dass die Position und optional die Neigung der Ausbringelemente 12a-12f, 14a-14e in Bezug auf das Spritzgestänge 10 während des Ausbringens der Flüssigkeiten veränderbar ist. Hierfür sind die Ausbringelemente 12a-12f, 14a-14e unabhängig voneinander aktiv ansteuerbar, sodass eine Bewegung der Ausbringelemente 12a-12f, 14a-14e quer zur Fahrtrichtung realisierbar ist. Das Bewegen der Ausbringelemente 12a-12f, 14a-14e erfolgt dabei über elektrische, pneumatische oder hydraulische Aktoren.

### Bezugszeichen

- 10: Spritzgestänge
- 12a-12k: Ausbringelemente
- 14a-14j: Ausbringelemente
- 16: Erfassungseinrichtung
- 18a-18h: Kameras
- 20a-20k: Pflanzenreihen
- 22a-22k: Reihenbereiche
- 24a-24j: Zwischenbereiche
- 26a, 26b: Flüssigkeitskreisläufe
- 28a, 28b: Vorratsbehälter
- 30a, 30b: Pumpen

- N: landwirtschaftliche Nutzfläche

## Patentansprüche

1. Verfahren zum Ausbringen von Flüssigkeit mittels einer landwirtschaftlichen Spritzeinrichtung, insbesondere einer Feldspritze, mit den Schritten:
- Erfassen von Pflanzenreihen auf einer landwirtschaftlichen Nutzfläche (N) mittels einer Erfassungseinrichtung (16) der Spritzeinrichtung; wobei die Erfassungseinrichtung mehrere Kameras umfasst; und
- Ausbringen von Flüssigkeit auf die landwirtschaftliche Nutzfläche (N) mittels Ausbringelementen (12a-12k, 14a-14j), welche entlang eines Spritzgestänges (10) der landwirtschaftlichen Spritzeinrichtung quer zur Fahrtrichtung angeordnet sind, wobei das Spritzgestänge (10) mehrere Gestängesegmente umfasst, welche zueinander klappbar ausgebildet sind, wobei an dem Spritzgestänge (10) die mehreren Kameras (18a-18h) der Erfassungseinrichtung (16) angeordnet sind, wobei das Ausbringen der Flüssigkeit auf die landwirtschaftliche Nutzfläche mittels der Ausbringelemente in Abhängigkeit der durch eine Steuerungseinrichtung ausgewerteten Kamerasignale erfolgt, **dadurch gekennzeichnet, dass** die Flüssigkeit mittels mehrerer erster der Ausbringelemente (12a-12k) entlang von Reihenbereichen (22a-22k), welche in Fahrtrichtung verlaufende Pflanzenreihen (20a-20k) aufweisen, und mittels mehrerer zweiter der Ausbringelemente (14a-14j) entlang von Zwischenbereichen (24a-24j), welche sich jeweils zwischen zwei in Fahrtrichtung verlaufenden Pflanzenreihen (20a-20k) befinden, ausgebracht wird, wobei sich die Ausbringung von Flüssigkeit entlang der Reihenbereiche (22a-22k) von der Ausbringung von Flüssigkeit entlang der Zwischenbereiche (24a-24j) hinsichtlich der Ausbringmenge an Flüssigkeit unterscheidet, wobei weder die Ausbringmenge in den Reihenbereichen noch die Ausbringmenge in den Zwischenbereichen gleich Null ist, wobei die Position von einzelnen oder sämtlichen Ausbringelementen (12a-12k, 14a-14j) in Bezug auf das Spritzgestänge (10) während des Ausbringens der Flüssigkeit verändert wird, wobei einzelne oder sämtliche Ausbringelemente aktiv und unabhängig voneinander angesteuert werden, wobei das Positionieren von Ausbringelementen durch eine Bewegung der Ausbringelemente quer zur Fahrtrichtung erfolgt, wobei ein oder mehrere Ausbringelemente oberhalb von Pflanzenreihen positioniert werden und ein oder mehrere Ausbringelemente oberhalb von Zwischenbereichen positioniert werden, und insbesondere sich die Ausbringung von Flüssigkeit entlang der Reihenbereiche (22a-22k) von der Ausbringung von Flüssigkeit entlang der Zwischenbereiche (24a-24j) hinsichtlich der Ausbringmethode unterscheidet, wobei insbesondere die Flüssigkeit entlang der Reihenbereiche (22a-22k) mittels eines ersten Typs von Ausbringelementen (12a-12k) und die Flüssigkeit entlang der Zwischenbereiche (24a-24j) mittels eines zweiten Typs von Ausbringelementen (14a-14j) ausgebracht wird.

2. Verfahren nach Anspruch 1, **dadurch gekennzeichnet, dass** entlang der Reihenbereiche (22a-22k) eine erste Flüssigkeit und entlang der Zwischenbereiche (24a-24j) eine zweite Flüssigkeit ausgebracht wird.

3. Verfahren nach Anspruch 2, **dadurch gekennzeichnet, dass** die erste Flüssigkeit Pflanzenschutzmittel und/oder Wachstumsregulatoren umfasst und/oder die zweite Flüssigkeit zumindest ein Herbizid umfasst.

4. Verfahren nach Anspruch 2 oder 3, **dadurch gekennzeichnet, dass** die erste Flüssigkeit den ersten der Ausbringelementen (12a-12f) über einen eigenen Flüssigkeitskreislauf (26a) zugeführt wird und/oder durch eine Wirkstoff-Direkteinspeisung erzeugt wird.

5. Verfahren nach einem der Ansprüche 2 bis 4, **dadurch gekennzeichnet, dass** die zweite Flüssigkeit den zweiten der Ausbringelementen (14a-14e) über einen eigenen Flüssigkeitskreislauf (26b) zugeführt wird und/oder durch eine Wirkstoff-Direkteinspeisung erzeugt wird.

6. Verfahren nach einem der vorstehenden Ansprüche, **dadurch gekennzeichnet**, die Ausbringung von Flüssigkeit entlang der Reihenbereiche (22a-22k) und/oder die Ausbringung von Flüssigkeit entlang der Zwischenbereiche (24a-24j) während des Ausbringvorgangs verändert wird.

7. Landwirtschaftliche Spritzeinrichtung, insbesondere Feldspritze, mit
- einer Erfassungseinrichtung (16), welche dazu eingerichtet ist, Pflanzenreihen (20a-20k) auf einer landwirtschaftlichen Nutzfläche (N) zu erfassen, wobei die Erfassungseinrichtung mehrere Kameras umfasst; und
- mehreren Ausbringelementen (12a-12k, 14a-14j), welche entlang eines Spritzgestänges (10) quer zur Fahrtrichtung angeordnet und dazu eingerichtet sind, Flüssigkeit auf die landwirtschaftliche Nutzfläche (N) auszubringen; wobei das Spritzgestänge (10) mehrere Gestängesegmente umfasst, welche zueinander klappbar ausgebildet sind, wobei an dem Spritzgestänge (10) die mehreren Kameras (18a-18h) der Erfassungseinrichtung (16) angeordnet sind, und
- eine Steuerungseinrichtung,
**dadurch gekennzeichnet, dass** die landwirtschaftliche Spritzeinrichtung dazu eingerichtet ist, das Verfahren zum Ausbringen von Flüssigkeit nach einem der Ansprüche 1 bis 6 auszuführen, wobei weder die Ausbringmenge in den Reihenbereichen noch die Ausbringmenge in den Zwischenbereichen gleich Null ist, wobei das Ausbringen der Flüssigkeit auf die landwirtschaftliche Nutzfläche mittels der Ausbringelemente in Abhängigkeit der durch die Steuerungseinrichtung ausgewerteten Kamerasignale erfolgt, wobei die Position von einzelnen oder sämtlichen Ausbringelementen (12a-12k, 14a-14j) in Bezug auf das Spritzgestänge (10) während des Ausbringens der Flüssigkeit verändert wird, wobei einzelne oder sämtliche Ausbringelemente aktiv und unabhängig voneinander angesteuert werden, wobei das Positionieren von Ausbringelementen durch eine Bewegung der Ausbringelemente quer zur Fahrtrichtung erfolgt, wobei ein oder mehrere Ausbringelemente oberhalb von Pflanzenreihen positioniert werden und ein oder mehrere Ausbringelemente oberhalb von Zwischenbereichen positioniert werden, und wobei die Steuerungseinrichtung dazu eingerichtet ist, die landwirtschaftliche Spritzeinrichtung zu veranlassen, entlang der Reihenbereiche (22a-22k) und entlang der Zwischenbereiche (24a-24j) unterschiedliche Ausbringmengen an Flüssigkeit und/oder unterschiedliche Flüssigkeiten auszubringen.

8. Landwirtschaftliche Spritzeinrichtung nach Anspruch 7, **gekennzeichnet durch** Ausbringelemente (12a-12k) eines ersten Typs und Ausbringelemente (14a-14j) eines zweiten Typs, wobei die Ausbringelemente (12a-12k, 14a-14j) derart angeordnet und/oder ausgerichtet sind, dass Flüssigkeit entlang der Reihenbereiche (22a-22k) mittels der Ausbringelemente (12a-12k) des erstens Typs und die Flüssigkeit entlang der Zwischenbereiche (24a-24j) mittels der Ausbringelemente (14a-14j) des zweiten Typs ausbringbar sind.

## Claims

1. A method for applying liquid by means of an agricultural sprayer, in particular a field sprayer, comprising the steps of:
- detecting rows of plants on an area of agriculturally productive land (N) by means of a detection device (16) of the sprayer;
- wherein the detection device comprises a plurality of cameras; and
- applying liquid onto the agriculturally productive land (N) by means of pplication elements (12a-12k, 14a-14j), which are arranged along a spray boom (10) of the agricultural sprayer transversely to the direction of travel wherein the spray boom (10) comprises a plurality of boom segments formed to be foldable relative to each other, wherein the plurality of cameras (18a-18h) of the detection device (16) are disposed on the spray boom (10), wherein the application of the liquid on the area of agriculturally productive land is performed by the application elements as a function of the camera signals evaluated by a control device, **characterized in that** the liquid is applied by means of a plurality of first of the application elements (12a-12k) along row regions (22a-22k) which have rows of plants (20a-20k) extending in the direction of travel, and by means of a plurality of second of the application elements (14a-14j) along intermediate regions (24a-24j), which are each located between two rows of plants (20a-20k) extending in the direction of travel, the application of liquid along the row regions (22a-22k) differing from the application of liquid along the intermediate regions (24a-24j) with respect to the application rate of liquid, wherein neither the application rate in the row regions nor the application rate in the intermediate regions equals zero, wherein the position of individual or all application elements in respect to the spray boom (10) is modified during the application of the liquid therein individual or all application elements are driven independent of each other, wherein the positioning of application elements is caused by a movement of the application elements transverse to the direction of travel, wherein one or more application elements are positioned above rows of plants and in particular the application of liquid along the row regions (22a-22k) differing from the application of liquid along the intermediate regions (24a-24j) with respect to the application method, wherein in particular the liquid being applied along the row regions (22a-22k) means of a first type of application elements (12a- 12k) and the liquid being applied along the intermediate regions (24a-24j) by means of a second type of application elements (14a-14j).

2. The method according to claim 1, **characterized in that** a first liquid is applied along the row regions (22a-22k) and a second liquid is applied along the intermediate regions (24a-2⁴j).

3. The method according to claim 2, **characterized in that** the first liquid comprises a plant protectant and/or growth regulators and/or the second liquid comprises at least one herbicide.

4. The method according to claims 2 or 3, **characterized in that** the first liquid is supplied the first ones of the application elements (12a-12f) via a separate liquid circuit (26a) and/or is produced by means of an active-ingredient direct feed.

5. The method according to any of claims 2 to 4, **characterized in that** the second liquid is supplied to the second ones of the application elements (14a-14e) via a separate liquid circuit (26b) and/or is produced by means of an active-ingredient direct feed.

6. The method according to any one of the preceding claims, **characterized in that** the application of liquid along the row regions (22a- 22k) and/or the application of liquid along the intermediate regions (24a-24j) is modified during the application process.

7. Agricultural sprayer, in particular a field sprayer, comprising
- a detection deice (16), which is designed to detect rows of plants (20a-20k) on an area of agriculturally productive land (N), wherein the detection device comprises a plurality of cameras ; and
- a plurality of application elements (12a-12k, 14a-14j), which are arranged along a spray boom (10) transversely to the direction of travel and are designed to apply liquid onto the agriculturally productive land (N); wherein the spray boom (10) comprises a plurality of boom segments formed to be foldable relative to each other, wherein the plurality of cameras (18a-18h) of the detection device (16) are disposed on the spray boom (10), and a control device, **characterized in that** the agricultural sprayer is designed to carry out the method for applying liquid according to anyone of claims 1 to 6, wherein neither the application rate in the row regions nor the application rate in the intermediate regions equals zero, wherein the position of individual or all application elements in respect to the spray boom (10) is modified during the application of the liquid therein individual or all application elements are driven independent of each other, wherein the positioning of application elements is caused by a movement of the application elements transverse to the direction of travel, wherein one or more application elements are positioned above rows of plants and one or more application elements are positioned above intermediate regions and wherein the control device is designed to cause the year agricultural sprayer to apply different application rates of liquid and/or different liquids along the row regions (22a-22k) and along the intermediate regions (24a-24j).

8. Agricultural sprayer according to claim 7, **characterized by** application elements (12a-12k) of a first type and application elements (14a-14j) of a second type, wherein the application elements (12a-12k, 14a-14j) are arranged and/or oriented in such a way that liquid can be applied along the row regions (22a-22k) by means of the application elements (12a-12k) of the first type and the liquid can be applied along the intermediate regions (24a-24j) by means of the application elements (14a-14j) of the second type.

## Revendications

1. Procédé d'épandage de liquide au moyen d'un dispositif de pulvérisation agricole, en particulier d'un pulvérisateur, comprenant les étapes de :
- détection de rangées de plantes sur une surface utile agricole (N) au moyen d'un dispositif de détection (16) du dispositif de pulvérisation ; le dispositif de détection comprenant plusieurs caméras ; et
- épandage de liquide sur la surface utile agricole (N) au moyen d'éléments d'épandage (12a-12k, 14a-14j), lesquels sont agencés le long d'une rampe de pulvérisation (10) du dispositif de pulvérisation agricole, transversalement par rapport au sens de déplacement, la rampe de pulvérisation (10) comprenant plusieurs segments de rampe qui sont conçus de manière à pouvoir être repliés les uns par rapport aux autres, la pluralité de caméras (18a-18h) du dispositif de détection (16) étant agencées sur la rampe de pulvérisation (10), l'épandage du liquide sur la surface utile agricole s'effectuant au moyen des éléments d'épandage en fonction des signaux de caméra évalués par un dispositif de commande, **caractérisé en ce que** le liquide est épandu au moyen de plusieurs premiers éléments d'épandage (12a-12k) le long de zones de rangées (22a-22k) qui présentent des rangées de plantes (20a-20k) s'étendant dans le sens de déplacement, et au moyen de plusieurs seconds éléments d'épandage (14a-14j) le long de zones intermédiaires (24a-24j) qui se situent respectivement entre deux rangées de plantes (20a-20k) s'étendant dans le sens de déplacement, l'épandage de liquide le long des zones de rangées (22a-22k) se distinguant de l'épandage de liquide le long des zones intermédiaires (24a-24j) en ce qui concerne la quantité d'épandage de liquide, ni la quantité d'épandage dans les zones de rangées ni la quantité d'épandage dans les zones intermédiaires n'étant égale à zéro, la position d'éléments d'épandage individuels ou de tous les éléments d'épandage (12a-12k, 14a-14j) par rapport à la rampe de pulvérisation (10) étant modifiée pendant l'épandage du liquide, des éléments d'épandage individuels ou tous les éléments d'épandage étant commandés de manière active et indépendamment les uns des autres, le positionnement des éléments d'épandage étant effectué grâce à un déplacement des éléments d'épandage transversalement par rapport au sens de déplacement, un ou plusieurs éléments d'épandage étant positionnés au-dessus des rangées de plantes et un ou plusieurs éléments d'épandage étant positionnés au-dessus des zones intermédiaires, et l'épandage de liquide le long des zones de rangées (22a-22k) se distinguant de l'épandage de liquide le long des zones intermédiaires (24a-24j) en particulier en ce qui concerne le procédé d'épandage, le liquide étant épandu le long des zones de rangées (22a-22k) en particulier au moyen d'un premier type d'éléments d'épandage (12a-12k) et le liquide étant épandu le long des zones intermédiaires (24a-24j) en particulier au moyen d'un second type d'éléments d'épandage (14a-14j).

2. Procédé selon la revendication 1, **caractérisé en ce qu'**un premier liquide est épandu le long des zones de rangées (22a-22k) et un second liquide est épandu le long des zones intermédiaires (24a-24j).

3. Procédé selon la revendication 2, **caractérisé en ce que** le premier liquide comprend des agents et/ou des régulateurs de croissance et/ou le second liquide comprend au moins un herbicide.

4. Procédé selon la revendication 2 ou 3, **caractérisé en ce que** le premier liquide est alimenté au premier des éléments d'épandage (12a-12f) par l'intermédiaire d'un circuit de liquide (26a) qui lui est propre et/ou est généré par une injection directe de substance active.

5. Procédé selon l'une quelconque des revendications 2 à 4, **caractérisé en ce que** le second liquide est alimenté au second des éléments d'épandage (14a-14e) par l'intermédiaire d'un circuit de liquide (26b) qui lui est propre et/ou est généré par une injection directe de substance active.

6. Procédé selon l'une quelconque des revendications précédentes, **caractérisé en ce que** l'épandage de liquide le long des zones de rangées (22a-22k) et/ou l'épandage de liquide le long des zones intermédiaires (24a-24j) sont modifiés pendant le processus d'épandage.

7. Dispositif de pulvérisation agricole, en particulier pulvérisateur agricole, comportant
- un dispositif de détection (16), lequel est configuré pour détecter des rangées de plantes (20a-20k) sur une surface utile agricole, le dispositif de détection comprenant plusieurs caméras ; et
- plusieurs éléments d'épandage (12a-12k, 14a-14j), lesquels sont agencés le long d'une rampe de pulvérisation (10) transversalement par rapport au sens de déplacement et configurés pour épandre du liquide sur la surface utile agricole (N) ; la rampe de pulvérisation (10) comprenant plusieurs segments de rampe conçus de manière à pouvoir être repliés les uns par rapport aux autres, la pluralité de caméras (18a-18h) du dispositif de détection (16) étant agencées sur la rampe de pulvérisation (10), et
- un dispositif de commande,
**caractérisé en ce que** le dispositif de pulvérisation agricole est configuré pour exécuter le procédé d'épandage de liquide selon l'une quelconque des revendications 1 à 6, ni la quantité d'épandage dans les zones de rangées ni la quantité d'épandage dans les zones intermédiaires n'étant égale à zéro, l'épandage du liquide sur la surface utile agricole étant effectuée au moyen des éléments d'épandage en fonction des signaux de caméra évalués par le dispositif de commande, la position d'éléments d'épandage individuels ou de tous les éléments d'épandage (12a-12k, 14a-14j) par rapport à la rampe de pulvérisation (10) étant modifiée pendant l'épandage du liquide, des éléments d'épandage individuels ou tous les éléments d'épandage étant commandés de manière active et indépendamment les uns des autres, le positionnement des éléments d'épandage étant effectué grâce à un déplacement des éléments d'épandage transversalement par rapport au sens de déplacement, un ou plusieurs éléments d'épandage étant positionnés au-dessus des rangées de plantes et un ou plusieurs éléments d'épandage étant positionnés au-dessus des zones intermédiaires, et le dispositif de commande étant configuré pour amener le dispositif de pulvérisation agricole à épandre des quantités d'épandage de liquide différentes et/ou des liquides différents le long des zones de rangées (22a-22k) et le long des zones intermédiaires (24a-24j).

8. Dispositif de pulvérisation agricole selon la revendication 7, **caractérisé par** des éléments d'épandage (12a-12k) d'un premier type et des éléments d'épandage (14a-14j) d'un second type, les éléments d'épandage (12a-12k, 14a-14j) étant agencés et/ou orientés de manière telle que du liquide peut être épandu le long des zones de rangées (22a-22k) au moyen des éléments d'application (12a-12k) du premier type et du liquide peut être épandu le long des zones intermédiaires (24a-24j) au moyen des éléments d'application (14a-14j) du second type.
